# EUROPEAN PATENT SPECIFICATION

(11) **EP 2 860 637 B1**
(45) Date of publication and mention of the grant of the patent: **26.04.2017**
(21) Application number: 12878742.1
(22) Date of filing: 11.06.2012
(51) Int. Cl.: G06F 13/00, H04L 29/08

(54) **INFORMATION PROCESSING SYSTEM, METHOD, AND PROGRAM**
INFORMATIONSVERARBEITUNGSSYSTEM, -VERFAHREN UND -PROGRAMM
SYSTÈME DE TRAITEMENT D'INFORMATIONS, PROCÉDÉ ET PROGRAMME ASSOCIÉS

(43) Date of publication of application: 15.04.2015
(73) Proprietor: Murakumo Corporation, Tokyo 153-0061 (JP)
(72) Inventor: WATANABE, Takahiro, Tokyo 153-0061 (JP)
(74) Representative: Wallin, Nicholas James
(86) International application number: PCT/JP2012/064934
(87) International publication number: WO 2013/186837

(56) References cited:
- JP-A- 2012 048 424
- JP-A- 2012 103 879
- US-A1- 2003 014 526
- US-A1- 2012 203 910
- US-B1- 7 133 891

## Description

### [Technical field]

A technique according to the present invention relates to information processing using a load balancer.

### [Background art]

In one conventionally known method for sharing session data, an application server, selected through load balancing performed by a load balancer, adds session data to a response packet and transmits the response packet as a reply to the load balancer, and the load balancer stores the session data added to a response packet. Then the load balancer transfers the response packet to a client terminal after deleting the session data therefrom (see Japanese Patent Application Laid-open No. 2010-79523).

### [Prior Art Documents]

### [Patent Application Publication]

[Document 1] Japanese Patent Application Laid-open No. 2010-79523

US 2012/0203910 discloses a method and apparatus for buffering and obtaining downloadable resources as well as a resource buffering system. It discloses assessing the popularity of a particular database resource over defined time intervals, and spreading a load over multiple cache servers to alleviate buffering problems.

US 2003/0014526 discloses a session replication system designed to minimise disruption to a user. The system utilises a primary server to serve requests from a network client as well as a secondary server which replicates session information.

### [Summary of the invention]

### [Problem to be solved by the invention]

Communication identification information such as a session ID has conventionally been used to identify communications between a client and a server. It is a common practice, in a case where a service is provided to the client by using a plurality of servers, to replicate the communication identification information among the servers to maintain communications.

Unfortunately, a method in which the communication identification information is replicated among all the servers involves a large load considering the amount of communications and the number of replicating processes. However, in a method in which the communication identification information is replicated among some of the servers, allocation of
communication may be implemented to a server which does not have the communication identification information.

The present invention is made in view of the problems described above, and an object of the present invention is to reduce a load for maintaining communications when a service is provided to a client by using a plurality of servers.

### [Means for solving the problem]

An information processing system according to an aspect of the present invention is an information processing system including a load balancer that determines an allocation target of communication with a client, with the communication being allocated to any of a plurality of servers to provide a service to the client, the information processing system including: a server identification unit that identifies a first server to which the communication has been allocated by the load balancer, from among the plurality of servers; a replication target server determination unit that determines at least one server from among the plurality of servers as a second server which is a target of replication of communication identification information for identifying the communication; a replication unit that replicates to the second server the communication identification information to be stored in the second server; and a notification unit that notifies the second server of information with which the first server is able to be identified.

The replication target server determination unit determines the second server by processing a part or all of the communication identification information on a basis of a predetermined algorithm that has reproducibility with respect to an input.

The information processing system according to the present invention may further include a server selection unit that selects the second server by processing the communication identification information extracted from a content of the communication on the basis of the predetermined algorithm, when the load balancer allocates the communication to the server other than the first server.

The information processing system according to the present invention may further include a communication identification information generation unit that generates the communication identification information in the first server, when the load balancer allocates the communication to the first server.

The replication target server determination unit may further determine at least one of the plurality of servers as the second sever, when one of the second servers is the same as the first server.

The plurality of servers may each include a non-volatile storage device, and when multiple servers are determined as the replication target servers by the replication target server determination unit, at least one of the multiple servers may not store the communication identification information in the non-volatile storage device.

The replication target server determination unit may determine, as the second server, the server that the first server has determined as the target of replication of the communication identification information.

The present invention may be regarded as an information processing apparatus, an information processing system including one or more information processing apparatus, a method performed by a computer, or a program that causes the computer to perform the method. The present invention may further be regarded as a recording medium stored with the program, readable by a computer, a device, a machine, and the like. Here, the recording medium, readable by a computer and the like, is a recording medium that stores information such as data and a program electrically, magnetically, optically, mechanically, or through a chemical action, the information being readable by the computer and the like.

### [Effect of the invention]

With the information processing according to the present invention, communications can be maintained under a smaller load when a service is provided to a client in use of a plurality of servers.

### [Brief description of the drawings]

FIG. 1 is a schematic view showing a hardware configuration of a system according to an embodiment;
FIG. 2 is a schematic view showing a functional configuration of the system according to the embodiment;
FIG. 3 is a schematic view showing a method for selecting a replication target server through Consistent Hashing, employed in the embodiment;
FIG. 4 is a first flowchart showing a flow of session information management processing according to the embodiment;
FIG. 5 is a second flowchart showing the flow of the session information management processing according to the embodiment; and
FIG. 6 is a third flowchart showing the flow of the session information management processing according to the embodiment.

### [Mode for carrying out the invention]

An embodiment of the present invention is described below with reference to the drawings. The embodiment described below is merely an example, and the present invention is not limited to specific configurations described below. The present invention may be implemented as appropriate using specific configurations for respective embodiments.

### <System configuration>

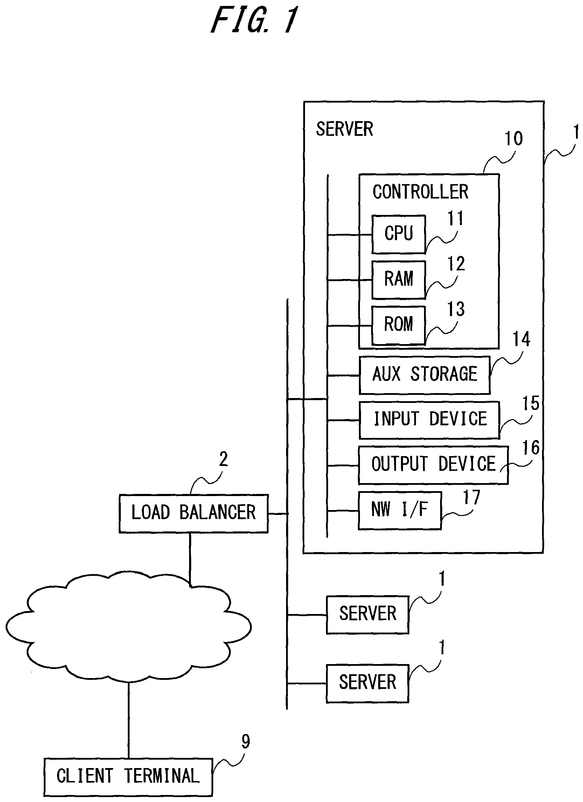

FIG. 1 is a schematic view showing a hardware configuration of a system according to the present embodiment. The system according to the present embodiment includes a plurality of servers 1 and a load balancer 2 that are communicably connected to each other through a network such as the Internet. A client terminal 9 is connected to the system according to the present embodiment through a network. The servers 1 and the load balancer 2 may each be formed of a single casing or may be formed of a plurality of casings connected to each other through the network and the like.

The servers 1 are information processing apparatuses each including: a controller 10 including a central processing unit (CPU) 11, a random access memory (RAM) 12, and a read only memory (ROM) 13; a non-volatile auxiliary storage 14; an input device 15; an output device 16; and a network interface 17. It is to be noted that the configuration of the information processing apparatus according to an embodiment of the present invention needs not to be the same as the configuration described above. Components in a specific hardware configuration of the information processing apparatus may be omitted, replaced, or added as appropriate, in accordance with an embodiment.

Although not elaborated in the figure, the load balancer 2 is also an information processing apparatus including: a controller including the CPU, the RAM, and the ROM; an auxiliary storage device; an input device; an output device; and a network interface, as is the case of the server 1. Although not elaborated in the figure, the client terminal 9 is also an information processing apparatus including: a controller including the CPU, the RAM, and the ROM; an auxiliary storage device; an input device; an output device; and a network interface, as is the case of the server 1.

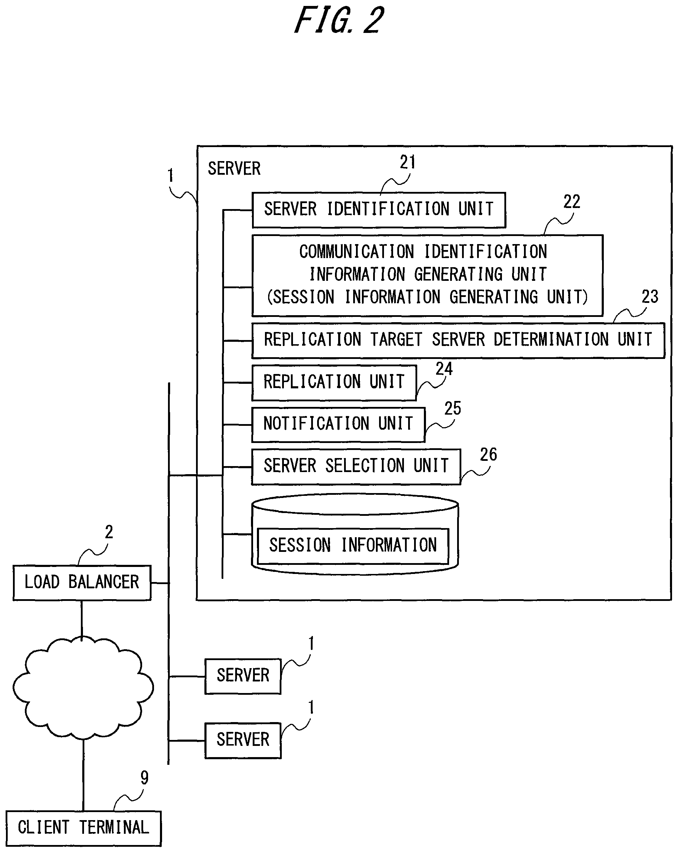

FIG. 2 is a schematic view showing a functional configuration of the system according to the present embodiment. In the server 1 according to the present embodiment, the CPU 11 interprets and executes various programs loaded onto the RAM 12 and controls various types of hardware of the server 1. Thus, the server 1 functions as an information processing apparatus including a server identification unit 21, a communication identification information generation unit (session information generation unit) 22, a replication target server determination unit 23, a replication unit 24, a notification unit 25, and a server selection unit 26. The functions, all of that are exemplarily described as being implemented by the general purpose CPU 11 in the present embodiment, may at least partially be implemented by at least one dedicated processor.

In the present embodiment, the servers 1 are each a server that functions to manage a website and transmit an HTML content in response to a content acquisition request made with HTTP. The server 1 distributes the content in the website in response to a request from the client terminal 9. In the present embodiment, a web service is described as an example of a service provided by the server 1. However, in implementing the present invention, the server 1 is not limited to a server that provides the web service. The present invention may be applied to a group of servers for providing other services as well.

In the present embodiment, a communication from the client terminal 9 to the website is first received by the load balancer 2. This load balancer 2, which serves as a load balancing apparatus allocates, upon receiving the communication from the client terminal 9, the communication to one of the servers 1 thereby distributing the load, imposed on the website, among the servers 1. The load balancer 2 used in the present embodiment determines the server 1 as a load distribution target to which the communication from the client terminal 9 is allocated, based on a certain load balancing algorithm. Basically, the load balancer 2 performs the allocation of communication from one client terminal 9 to one server 1 in order to maintain a session between the client terminal 9 and the server 1. However, due to a certain situation on a side of the server 1 or the load balancer 2, the communication from the one client terminal 9 may be allocated to a server 1 that is different from the one server 1. For example, as the situation on the side of the server 1, the server 1 might be down. As the situation on the side of the load balancer 2, the load balancer 2 might change the server 1 as the allocation target in an attempt to increase a processing speed or there might be a problem in the performance of the load balancer 2.

The server 1, allocated with the communication from the client terminal 9 by the load balancer 2, issues a session ID to the client terminal 9. With the session ID, at least the client terminal 9 or a user can be uniquely identified. After this process, the server 1 identifies communications between the client terminal 9 and the server 1 by using the session ID, and manages the communications between the client terminal 9 and the server 1 by using session information identified by the session ID. Thus, after the issuance of the session ID, a packet transmitted between the server 1 and the client terminal 9 includes the session ID. The session ID is an identifier with which a communication with the client terminal 9 or the user is identified and a service is provided to each client terminal 9 or user. The session ID corresponds to a "communication identifier" of the present invention.

The client terminal 9 has a function of transmitting a packet to a website designated with a uniform resource locator (URL) and a function of receiving a content transmitted as a reply from the server 1 allocated with the packet by the load balancer 2. The client terminal 9 also stores a session ID received from a webserver and used for managing communications with the connected server 1.

In the present embodiment, the session information, including the session ID issued by any of the servers 1, is replicated to at least one server 1. The server 1 determined as a target of replication of the session information is referred to as "replication target server". The server 1 as the session information replication target is determined by using an algorithm common to all the servers 1. The algorithm employed as the common algorithm may be any algorithm having reproducibility in the server 1 and being selected in accordance with an input (the session ID in the present embodiment). Because the server 1 is determined to be the replication target server by using such an algorithm, the algorithm can be used for selecting the replication target server after the replication target server is determined by using the session ID. In the present invention, a method for determining the replication target server with Consistent Hashing is employed as a method for determining the replication target server by using such an algorithm.

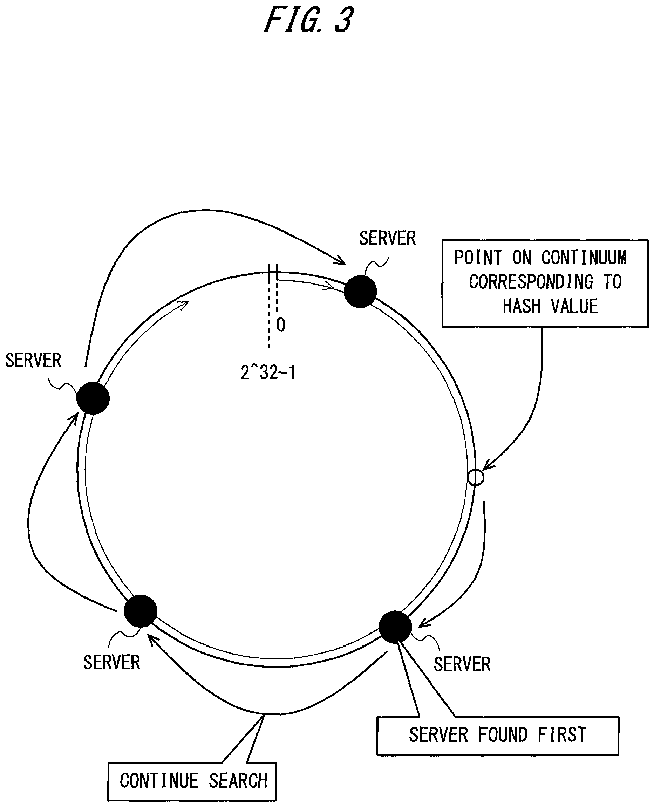

FIG. 3 is a schematic view showing a method for determining the replication target server with Consistent Hashing, employed in the present embodiment. In Consistent Hashing, a continuum is used in which integers from 0 to a predetermined number n (for example, 2^32-1) are sequentially defined at equal intervals in a single direction (clockwise in the figure) on a circumference. Thus, the number on the continuum is incremented by 1 from 0 to n, at the final point on the continuum, in the single direction (clockwise) along the circumference, and then returns to 0. The servers 1 used for websites in the present embodiment are each allocated with any one of the integers from 0 to n as the server identifier. In other words, the servers 1 used in the system are mapped on the continuum.

The server 1 uses a hashing operation algorithm, common to all the servers 1, and obtains a hash value unique to each session ID for determining and selecting the server 1 as the session information replication target server. The hash value may be obtained by performing a hashing operation with a part or all of the session IDs as input values. When a hash value within the range from 0 to n is used as the session ID, the session ID may be directly used as the hash value for determining a point on the continuum.

First of all, the replication target server determination unit 23 or the server selection unit 26 initiates search in the single direction (clockwise in the figure) in use of a point on the continuum corresponding to the obtained hash value as the starting point. The first server 1 to be found is determined as the session information replication target (or selected as an acquisition target). The search is terminated when a single server 1 is set to be the replication target, or when the session information is acquired from the selected server 1. The search in the single direction (clockwise in the figure) on the continuum continues when two or more servers 1 are set be the replication target, or when the session information is not acquired from the selected server 1. The server 1 found next is again determined as the target of replication of the session information (or selected as the acquisition target). When the value of the searched position exceeds the limit value n (2^32-1 for example) while the search is still in process, the searched position returns to the starting point (that is, 0) and the search continues.

### <Flow of processing>

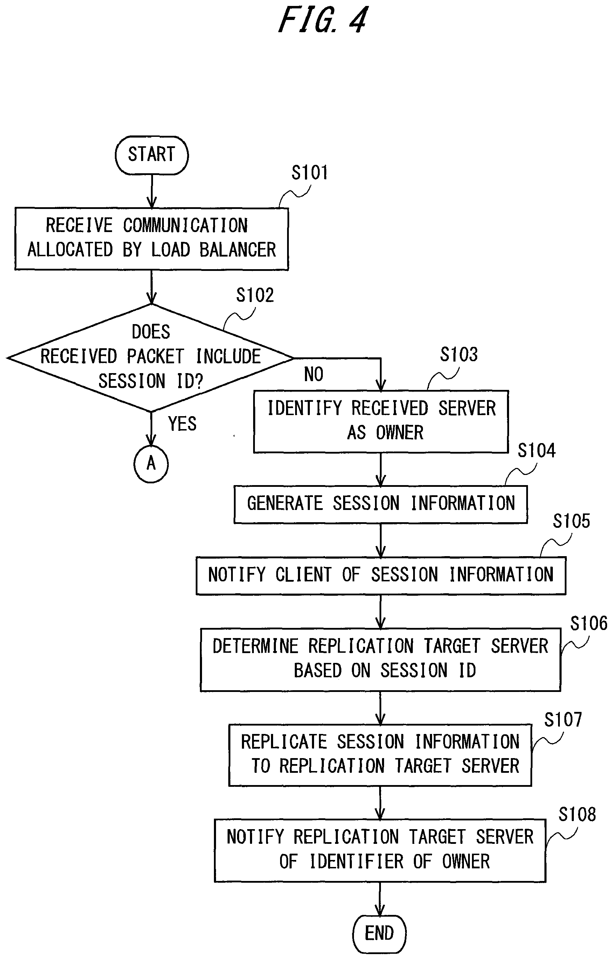

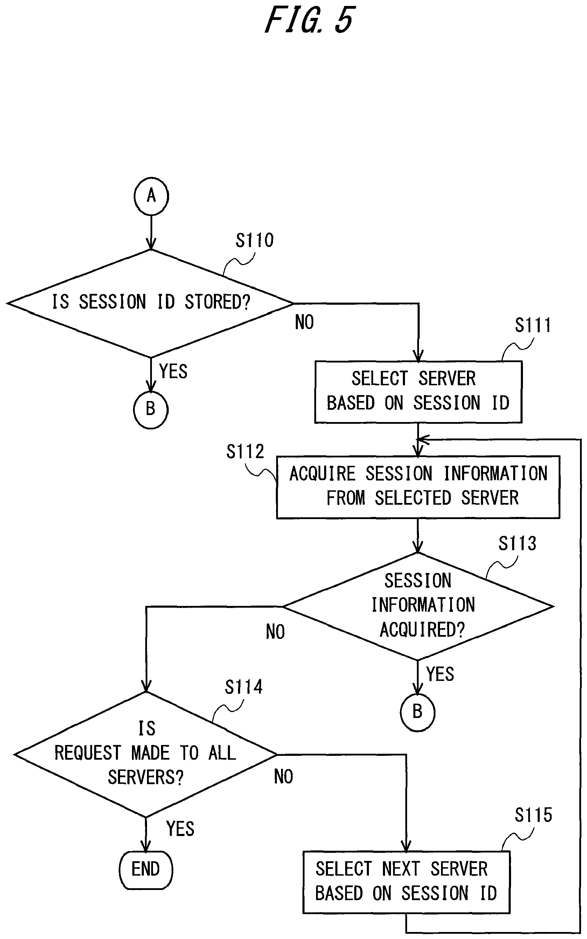

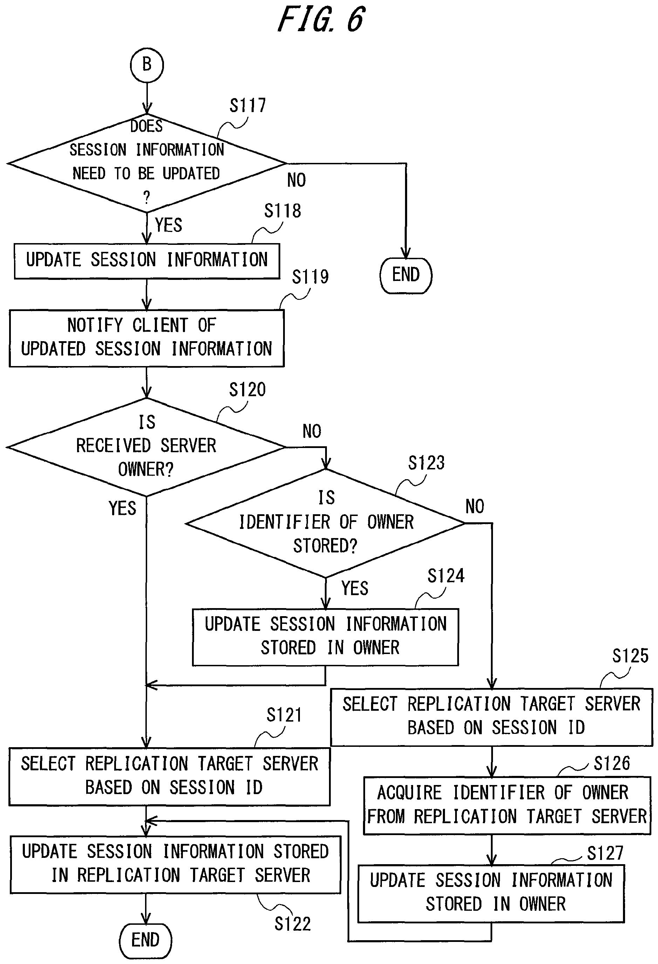

Processing in the present embodiment is described in detail with reference to FIGS. 4 to 6. The detail and the order of steps in the processing described in the present embodiment are merely an example, and thus can be selectively employed as appropriate in accordance with an embodiment.

FIGS. 4 to 6 are each a flowchart showing a flow of session information management processing according to the present embodiment. The processing shown in the flowcharts is triggered by the reception of a packet, transmitted from the client terminal 9, by the server 1 to which the communication has been allocated by the load balancer 2.

In step S101, a communication from the client terminal 9 is received. Specifically, the packet transmitted from the client terminal 9 is first received by the load balancer 2 and then is received by the server 1. Upon receiving the packet transmitted from a client terminal 9, the load balancer 2 determines one of the servers 1 as the allocation target of the packet on a basis of on a predetermined load balancing algorithm, and transfers the packet to the server 1 thus determined. Thus, the packet reaches one of the servers 1. In other words, the server 1 allocated with the communication by the load balancer 2 receives the packet transmitted from the client terminal 9. The server 1 that has received the packet is hereinafter referred to as "received server". The processing then proceeds to step S102.

In step S102, whether the session ID is set to the received packet is determined. Specifically, the received server refers to the packet received in step S101 to determine whether the packet includes the session ID for identifying communications between the server 1 and the client terminal 9. The processing proceeds to step S110, when the packet includes the session ID, that is, when one of the servers 1 has already issued the session ID to the client terminal 9. The processing proceeds to step S103, when the packet includes no session ID, that is, when no session ID has been issued to the client terminal 9 as the transmission source of the packet.

Processing from step S103 to step 108, performed when no session ID has been issued to the client terminal 9 as the transmission source of the packet, is processing in which a session ID is issued, and session information related to the session ID is replicated to another server 1.

In step S103, an owner is identified. The server identification unit 21 of the received server identifies the host apparatus (received server) as the owner. In the present embodiment, the owner is one of the servers 1 that serves as the "owner" of the session information in the session information replication processing, and corresponds to a "first server" of the present invention. In the present embodiment, the received server is selected as the owner. The received server is the server 1 allocated with the communication by the load balancer 2, and is the server 1 that has generated the session information. However, the owner is not limited to the server 1 that has generated the session information or the received server, and any server 1 with the session information may be designated as the owner. The processing then proceeds to step S104.

In steps S104 and S105, the session information is generated and notified. The communication identification information generation unit 22 of the received server generates the session information including the session ID (step S104). The session information is information for identifying communications between the client terminal 9 as the transmission source of the packet and the server 1. The received server notifies the client terminal 9, as the transmission source of the packet, of the session information thus generated (step S105). The processing then proceeds to step S106.

In step S106, the replication target server is determined based on the session ID. The replication target server determination unit 23 of the received server determines the replication target server by using Consistent Hashing described above. More specifically, the received server performs the hashing operation with a part or all of the session IDs as an input value to obtain a hash value. The employed hashing operation has reproducibility with respect to an input. The server 1 performs the search in use of a point corresponding to the hash value thus obtained as the starting point on the continuum, and determines a predetermined number of servers 1 as the replication target servers in order these servers have been found. The replication target server corresponds to a "second server" of the present invention. The processing then proceeds to step S107.

In step S106, whether the owner is identical to the replication target server may be determined. The received server determines whether the owner is identical to the replication target server by comparing the server identifier of the owner determined in step S103 with the server identifier of at least one replication target server found in step S106. When the received server determines that the owner has been identical to the replication target server (one replication target server is the same as the owner), the replication target server determination unit 23 implements redetermination of the replication target server. Specifically, the replication target server determination unit 23 performs the search in use of a point corresponding to the obtained hash value as the starting point on the continuum. The replication target server determination unit 23 determines the predetermined number of servers 1, which are not identical to the owner, as the replication target servers in order these servers have been found. As described above, in the processing shown in the flowchart, the replication target server determination processing is repeated until a predetermined number of replication target server, different from the owner, are selected. When the predetermined number of replication target servers are determined, the processing proceeds to step S107.

In step S107 and step S108, the session information is replicated to the replication target server, and the replication target server is notified of the identifier of the owner. The replication unit 24 of the received server transmits the session information, generated in step S104, to the replication target server determined in step S106, so that the session information is replicated to and stored in the replication target server (step S107).

When a plurality of replication target servers are determined so that the session information is replicated to the replication target servers, only a part (for example, one) of the replication target servers may store the session information in the non-volatile auxiliary storage 14. When only the part of the replication target servers stores the session information in the non-volatile auxiliary storage 14, the remaining part of the replication target servers stores the session information in the RAM 12. Thus, an area used for the session information replication in the auxiliary storage 14 can be saved.

Then, the notification unit 25 of the received server, which is the owner, notifies the replication target server, which has been determined in step S106, of the server identifier of the notification unit 25 to be used in the continuum as the information with which the owner can be identified (step S108). The replication target server can recognize the server 1 as the owner of the session information (the server 1 that has generated the session information) with the server identifier notified from the owner. The replication of the session information in step S107 and the notification of the owner identifier in step S108 may be performed through different packets respectively or the same packet. The processing in step S107 and the processing in step S108 may be performed in the opposite order. The processing shown in this flowchart is then terminated.

In step S110, whether the session information is stored in the received server is determined. When the session ID is set to the received packet, the received server determines whether the session information, corresponding to the session ID set to the received packet, is stored in the received server. When the received server determines that the session information is stored in the received server, the received server manages the content of the communications with the client terminal 9 by using the session information. Then processing proceeds to step S117. The processing proceeds to step S111 when the session information is not stored in the received server.

Processing from step S111 to step S115 is processing for acquiring the session information from another server 1, when the session ID is set to the received packet (step S102: YES), but the session information is not stored in the received server (step S110: NO). In the system according to the present embodiment, even when the server 1 without the session ID is allocated with the communication by the load balancer 2, the server 1 allocated with the communication can select the replication target server based on the session ID to acquire the session information through the processing from step S111 to step S115.

In step S111, the server 1 is selected based on the session ID. The server selection unit 26 of the received server selects the server 1 through Consistent Hashing described above. More specifically, the received server performs the hashing operation with the session ID as an input value to obtain a hash value. The server 1 performs a search in use of a point corresponding to the hash value thus obtained as the starting point on the continuum, and selects the first server 1 found. The algorithm used for the selection in step S111 is the same as the one used for determining the replication target server in step S106 (Constant Hashing using the same continuum in the present embodiment). Thus, the replication target server determined in step S106 to which the session information has been replicated is selected with a higher priority in step S111. The processing then proceeds to step S112.

In step S112, an attempt to acquire the session information from the selected server 1 is made. Specifically, the received server requests the session information corresponding to the session ID set to the received packet from the server 1 selected in step S111. When the requested server 1 has the session information, the session information is successfully acquired. However, the session information might fail to be acquired due to a certain circumstance including a case where the requested server 1 is not the replication target server or a case where the requested server 1 is under failure.

In step S113 to step S115, the selection of the server 1 based on the session ID and the request for the session information are repeated until the session information is acquired. Thus, the received server determines whether the session information has been successfully acquired in step S112 (step S113). Upon determining that the session information has been successfully acquired, the received server manages the content of the communications performed with the client terminal 9 by using the acquired session information. The processing then proceeds to step S117 for updating the session information.

When the received server determines that the acquisition of the session information has failed, the server selection unit 26 of the received server selects the next server 1 based on the session ID (step S115), and requests from the selected server 1 the session information (step S112). Here, the "next server" to be selected is the next server 1 found after the server 1, found in the processing in immediately preceding step S112, by continuing the search with Consistent Hashing described with reference to FIG. 3. The selection of the next server 1 and the request for the session information are repeated until the session information is acquired (step S113: YES). In the present embodiment, as the explanation of steps S103 to S108 indicated, the replication target servers are selected by a predetermined number (one or more servers), but there is a limitation to the number of servers. Thus, when the session information cannot be acquired even when the whole circumference of the continuum has been searched and thus the request has been made to all the servers 1 (step S114: YES), the acquisition of the session information fails, and the processing in this flowchart is terminated.

In step S113 to S115, the selection of the server 1 based on the session ID and the request for the session information are repeated until these session information is acquired, regardless of whether the server 1 selected each time is the replication target server. This processing is nothing more than auxiliary processing for increasing the reliability of the session information replication processing using Consistent Hashing, and thus can be omitted.

In step S117 to step S127, the session information stored in the owner and the replication target server is updated.

In step S117, whether the session information needs to be updated is determined. Specifically, the received server determines whether the session information used between the received server and the client terminal 9 needs to be updated in accordance with the communications with the client terminal 9. The session information is updated when the content to be managed in the communications is changed, added, and deleted in the course of the communications between the client terminal 9 and the received server. When the received server determines that the session information needs not to be updated, the processing shown in this flowchart is terminated. When the received server determines that the session information needs to be updated, the processing proceeds to step S118.

In steps S118 and step S119, the session information is updated, and the client terminal 9 is notified of the updated session information. The received server updates the session information (step S118) and transmits the response packet including the updated session information to the client terminal 9, whereby the client terminal 9 is notified of the updated session information (step S119). The updating and notification of the session information is processing that has conventionally been performed in the server/client communications, and thus will not be described in detail. The processing then proceeds to step S120.

In step S120 to step S122, the session information of the replication target server is updated when the received server is the owner. The received server determines whether the received server is the owner of the session information related to the session ID set to the received packet (step S120). When the received server determines that the received server is not the owner of the session information, the processing proceeds to step S123. When the received server is determined to be the owner of the session information, the server selection unit 26 of the received server selects the replication target server based on the session ID (step S121), and updates the session information stored in the replication target server (step S122). The session information stored in the owner has been updated in step S118. The processing in step S121 is substantially the same as the processing in step S111 described above, and thus the explanation thereof will be omitted. In step S122, the received server transmits the session information updated in step S118 to the replication target server selected in step S121. Thus, the session information stored in the replication target server is updated (step S122). When the received server is the owner, the session information held by the owner and the replication target server is updated through the processing in step S118 to step S122. The processing shown in this flowchart is then terminated.

In step S123 and step S124, the session information of the owner is updated when the identifier of the owner is stored in the received server. When the received server is not the owner of the session information (step 120: NO), the received server determines whether the identifier of the owner is stored in the received server (step S123). For example, when the received server is one of the replication target servers, the server identifier of the owner that has been notified through the processing in step S108 is stored in the received server. When the received server determines that the server identifier of the owner is not stored in the received server, the processing proceeds to step S125. When the server identifier of the owner is determined to have been stored in the received server, the received server transmits the session information updated in step S118 to the server 1 indicated by the server identifier of the owner. Thus, the session information stored in the owner is updated (step S124). The processing then proceeds to step S121.

Then, the server selection unit 26 of the received server selects the other replication target servers based on the session ID (step S121), and updates the session information stored in the other replication target servers (step S122). Then, the processing shown in this flowchart is terminated.

In step S125 to step S127, the replication target server is selected based on the session ID, and the owner is identified by the server identifier of the owner stored in the replication target server which has been selected secondary. When the received server is not the owner and the identifier of the owner is not stored in the received server (step S120: NO, step S123: NO), the server selection unit 26 of the received server selects the replication target server based on the session ID (step S125), and requests from the selected replication target server the owner information. Thus, the server identifier of the owner is acquired (step S126). The received server transmits the session information updated in step S118 to the server 1 indicated by the server identifier of the owner to update the session information stored in the owner (step S127).

Then, the received server transmits the session information updated in step S118 to the replication target server selected in step S126 to update the session information stored in the replication target server (step S122). The processing shown in this flowchart is then terminated.

## Claims

1. An information processing system including a load balancer (2) that determines an allocation target of communication with a client, with the communication being allocated to any of a plurality of servers (1) to provide a service to the client,
the information processing system comprising:
a server identification unit (21) that identifies a first server to which the communication has been allocated by the load balancer (2), from among the plurality of servers;
a replication target server determination unit (23) that determines at least one server from among the plurality of servers as a second server which is a target of replication of communication identification information for identifying the communication;
a replication unit (24) that replicates to the second server the communication identification information to be stored in the second server; and
a notification unit (25) that notifies the second server of information with which the first server is able to be identified as the owner of the communication identification information and causes the second server to store the information identifying the first server, the second server being arranged to update the communication identification information stored in the first server as the owner of said communication identification information.

2. The information processing system according to claim 1, wherein the replication target server determination unit determines the second server by processing a part or all of the communication identification information on a basis of a predetermined algorithm that has reproducibility with respect to an input.

3. The information processing system according to claim 2, further comprising a server selection unit (26) that selects the second server by processing the communication identification information extracted from a content of the communication on a basis of the predetermined algorithm, when the load balancer allocates the communication to the server other than the first server.

4. The information processing system according to any one of claims 1 to 3, further comprising a communication identification information generation unit that generates the communication identification information in the first server, when the load balancer allocates the communication to the first server.

5. The information processing system according to any one of claims 1 to 4, wherein the replication target server determination unit further determines at least one of the plurality of servers as the second sever, when one of the second servers is the same as the first server.

6. The information processing system according to any one of claims 1 to 5, wherein
the plurality of servers each include a non-volatile storage device, and
when multiple servers are determined as the replication target servers by the replication target server determination unit, at least one of the multiple servers does not store the communication identification information in the non-volatile storage device.

7. The information processing system according to any one of claims 1 to 6, wherein the replication target server determination unit determines, as the second server, the server that the first server has determined as the target of replication of the communication identification information.

8. An information processing method performed by an information processing system including a load balancer that determines an allocation target of communication with a client, with the communication being allocated to any of a plurality of servers to provide a service to the client,
the method comprising:
identifying a first server to which the communication has been allocated by the load balancer, from among the plurality of servers;
determining at least one of the plurality of servers as a second server which is a target of replication of communication identification information for identifying the communication;
replicating to the second server the communication identification information to be stored in the second server; and
notifying the second server of information with which the first server is able to be identified as the owner of the communication identification information, and causing the second server to store the information identifying the first server, and
from the second server, updating the communication identification information stored at the first server as the owner of said communication identification information.

9. A program causing an information processing system including a load balancer that determines an allocation target of communication with a client, with the communication being allocated to any of a plurality of servers in order to provide a service to the client, to function as:
a load balancer that determines an allocation target of the communication;
a server identification unit that identifies a first server to which the communication has been allocated by the load balancer, from among the plurality of servers;
a replication target server determination unit that determines at least one of the plurality of servers as a second server which is a target of replication of communication identification information for identifying the communication;
a replication unit that replicates to the second server the communication identification information to be stored in the second server; and
a notification unit that notifies the second server of information with which the first server is able to be identified as the owner of the communication identification information, and causes the second server to store the information identifying the first server, wherein the system is arranged such that the second server may update the communication identification information stored in the first server as the owner of said communication identification information.

## Patentansprüche

1. Ein Informationsverarbeitungssystem, das einen Lastverteiler (2) aufweist, der ein Zuweisungsziel einer Kommunikation mit einem Client bestimmt, wobei die Kommunikation irgendeinem einer Vielzahl von Servern (1) zugewiesen wird, um dem Client einen Service bereitzustellen,
wobei das Informationsverarbeitungssystem umfasst:
eine Serveridentifizierungseinheit (21), die einen ersten Server, dem die Kommunikation mittels des Lastverteilers (2) zugewiesen worden ist, unter der Vielzahl von Servern identifiziert;
eine Replikationszielserverbestimmungseinheit (23), die zumindest einen Server unter der Vielzahl von Servern als einen zweiten Server bestimmt, der ein Ziel einer Replikation einer Kommunikationsidentifizierungsinformation zur Identifizierung der Kommunikation ist;
eine Replikationseinheit (24), die die Kommunikationsidentifizierungsinformation zu dem zweiten Server repliziert, damit sie in dem zweiten Server gespeichert wird; und
eine Mitteilungseinheit (25), die dem zweiten Server eine Information mitteilt, mit der der erste Server als der Besitzer der Kommunikationsidentifizierungsinformation identifiziert werden kann, und den zweiten Server dazu veranlasst, die Information, die den ersten Server identifiziert, zu speichern, wobei der zweite Server dazu ausgebildet ist, die in dem ersten Server als dem Besitzer der Kommunikationsidentifizierungsinformation gespeicherte Kommunikationsidentifizierungsinformation zu aktualisieren.

2. Das Informationsverarbeitungssystem nach Anspruch 1, wobei die Replikationszielserverbestimmungseinheit den zweiten Server mittels einer Verarbeitung eines Teils oder der gesamten Kommunikationsidentifizierungsinformation auf Basis eines vorbestimmten Algorithmus bestimmt, der eine Reproduzierbarkeit bezüglich einer Eingabe aufweist.

3. Das Informationsverarbeitungssystem nach Anspruch 2, weiter umfassend eine Serverauswahleinheit (26), die den zweiten Server mittels einer Verarbeitung der Kommunikationsidentifizierungsinformation, die aus einem Inhalt der Kommunikation extrahiert wird, auf Basis des vorbestimmten Algorithmus auswählt, wenn der Lastverteiler die Kommunikation dem Server zuweist, der ein anderer als der erste Server ist.

4. Das Informationsverarbeitungssystem nach einem der Ansprüche 1 bis 3, weiter umfassend eine Erzeugungseinheit für die Kommunikationsidentifizierungsinformation, die die Kommunikationsidentifizierungsinformation in dem ersten Server erzeugt, wenn der Lastverteiler die Kommunikation dem ersten Server zuweist.

5. Das Informationsverarbeitungssystem nach einem der Ansprüche 1 bis 4, wobei die Replikationszielserverbestimmungseinheit des Weiteren zumindest einen der Vielzahl von Servern als den zweiten Server bestimmt, wenn einer der zweiten Server der selbe wie der erste Server ist.

6. Das Informationsverarbeitungssystem nach einem der Ansprüche 1 bis 5, wobei
bei der Vielzahl von Servern jeder Server eine nichtflüchtige Speichereinrichtung aufweist und,
wenn viele Server mittels der Replikationszielserverbestimmungseinheit als die Replikationszielserver bestimmt worden sind, zumindest einer der vielen Server die Kommunikationsidentifizierungsinformation nicht in der nichtflüchtigen Speichereinrichtung speichert.

7. Das Informationsverarbeitungssystem nach einem der Ansprüche 1 bis 6, wobei die Replikationszielserverbestimmungseinheit als den zweiten Server den Server bestimmt, den der erste Server als das Ziel einer Replikation der Kommunikationsidentifizierungsinformation bestimmt hat.

8. Ein Informationsverarbeitungsverfahren, das durch ein Informationsverarbeitungssystem durchgeführt wird, das einen Lastverteiler aufweist, der ein Zuweisungsziel einer Kommunikation mit einem Client bestimmt, wobei die Kommunikation irgendeinem einer Vielzahl von Servern zugewiesen wird, um dem Client einen Service bereitzustellen,
wobei das Verfahren umfasst:
Identifizieren eines ersten Servers unter der Vielzahl von Servern, dem die Kommunikation mittels des Lastverteilers zugewiesen worden ist;
Bestimmen zumindest eines der Vielzahl von Servern als ein zweiter Server, der ein Ziel einer Replikation einer Kommunikationsidentifizierungsinformation zur Identifizierung der Kommunikation ist;
Replizieren der Kommunikationsidentifizierungsinformation zu dem zweiten Server, damit sie in dem zweiten Server gespeichert wird; und
Mitteilen einer Information zu dem zweiten Server, mit der der erste Server als der Besitzer der Kommunikationsidentifizierungsinformation identifiziert werden kann, und Veranlassen des zweiten Servers, die den ersten Server identifizierende Information zu speichern, und
von dem zweiten Server Aktualisieren der Kommunikationsidentifizierungsinformation, die bei dem ersten Server als dem Besitzer der Kommunikationsidentifizierungsinformation gespeichert ist.

9. Ein Programm, das ein Informationsverarbeitungssystem dazu veranlasst, das einen Lastverteiler aufweist, der ein Zuweisungsziel einer Kommunikation mit einem Client bestimmt, wobei die Kommunikation irgendeinem einer Vielzahl von Servern zugewiesen wird, um dem Client einen Service bereitzustellen, zu funktionieren als:
ein Lastverteiler, der ein Zuweisungsziel der Kommunikation bestimmt;
eine Serveridentifizierungseinheit, die einen ersten Server, dem die Kommunikation mittels des Lastverteilers zugewiesen worden ist, unter der Vielzahl von Servern identifiziert;
eine Replikationszielserverbestimmungseinheit, die zumindest einen der Vielzahl von Servern als einen zweiten Server bestimmt, der ein Ziel einer Replikation einer Kommunikationsidentifizierungsinformation zur Identifizierung der Kommunikation ist;
eine Replikationseinheit, die die Kommunikationsidentifizierungsinformation zu dem zweiten Server repliziert, damit sie in dem zweiten Server gespeichert wird; und
eine Mitteilungseinheit, die dem zweiten Server eine Information mitteilt, mit der der erste Server als der Besitzer der Kommunikationsidentifizierungsinformation identifiziert werden kann, und den zweiten Server dazu veranlasst, die Information, die den ersten Server identifiziert, zu speichern, wobei das System derart aufgebaut ist, dass der zweite Server die in dem ersten Server als dem Besitzer der Kommunikationsidentifizierungsinformation gespeicherte Kommunikationsidentifizierungsinformation aktualisieren kann.

## Revendications

1. Système de traitement d'informations comprenant un équilibreur de charge (2) qui détermine une cible d'attribution d'une communication avec un client, cette communication étant attribuée à un serveur parmi un ensemble de serveurs (1) pour fournir un service au client,
ce système de traitement d'informations comprenant :
une unité d'identification de serveur (21) qui identifie un premier serveur parmi l'ensemble de serveurs auquel la communication a été attribuée par l'équilibreur de charge (2),
une unité de détermination de serveur cible de duplication (23) qui fixe au moins un serveur parmi l'ensemble de serveurs en tant que second serveur qui constitue une cible de duplication de l'information d'identification de communication permettant d'identifier la communication,
une unité de duplication (24) qui reproduit pour le second serveur l'information d'identification de communication devant être enregistrée celui-ci, et
une unité de notification (25) qui informe le second serveur de l'information par laquelle le premier serveur peut être identifié en tant que détenteur de l'information d'identification de communication et provoque l'enregistrement par le second serveur de l'information identifiant le premier serveur,
le second serveur étant réalisé pour permettre de mettre à jour l'information d'identification de communication enregistrée dans le premier serveur en tant que détenteur de cette information d'identification de communication.

2. Système de traitement d'informations conforme à la revendication 1, dans lequel l'unité de détermination du serveur cible de duplication fixe le second serveur en traitant une partie ou la totalité de l'information d'identification de communication sur le fondement d'un algorithme prédéfini qui présente un caractère reproductible par rapport à une entrée.

3. Système de traitement d'informations conforme à la revendication 2,
comprenant en outre une unité de sélection de serveur (26) qui sélectionne le second serveur en traitant l'information d'identification de communication extraite du contenu de la communication sur le fondement de l'algorithme prédéfini lorsque l'équilibreur de charge attribue la communication à un serveur autre que le premier serveur.

4. Système de traitement d'informations conforme à l'une quelconque des revendications 1 à 3,
comprenant en outre une unité de création d'information d'identification de communication qui crée l'information d'identification de communication dans le premier serveur lorsque l'équilibreur de charge attribue la communication au premier serveur.

5. Système de traitement d'informations conforme à l'une quelconque des revendications 1 à 4,
dans lequel l'unité de détermination du serveur cible de duplication fixe en outre au moins un serveur parmi l'ensemble de serveurs en tant que second serveur, lorsque l'un des seconds serveurs est le même que le premier serveur.

6. Système de traitement d'informations conforme à l'une quelconque des revendications 1 à 5,
dans lequel
les serveurs de l'ensemble de serveurs comprennent chacun un dispositif de mémoire non volatile, et
lorsque plusieurs serveurs sont fixés en tant que serveurs cibles de duplication par l'unité de détermination de serveur cible de duplication, au moins l'un de ces serveurs n'enregistre pas l'information d'identification de communication dans le dispositif de mémoire non volatile.

7. Système de traitement d'informations conforme à l'une quelconque des revendications 1 à 6,
dans lequel l'unité de détermination du serveur cible de duplication fixe en tant que second serveur, le serveur que le premier serveur a fixé en tant que cible de la duplication de l'information d'identification de communication.

8. Procédé de traitement d'informations mis en oeuvre par un système de traitement d'informations comprenant un équilibreur de charge qui détermine une cible d'attribution d'une communication avec un client, cette communication étant attribuée à un serveur parmi un ensemble de serveurs pour fournir un service au client,
ce procédé comprenant des étapes consistant à :
identifier un premier serveur parmi l'ensemble de serveurs auquel la communication a été attribuée par l'équilibreur de charge,
déterminer au moins un serveur parmi l'ensemble de serveurs en tant que second serveur qui est une cible de duplication de l'information d'identification de communication pour permettre d'identifier la communication,
reproduire pour le second serveur l'information d'identification de communication devant être enregistrée dans celui-ci, et
informer le second serveur de l'information par laquelle le premier serveur peut être identifié en tant que détenteur de l'information d'identification de communication,
provoquer l'enregistrement par le second serveur de l'information identifiant le premier serveur, et
à partir du second serveur, mettre à jour l'information d'identification de communication enregistrée dans le premier serveur en tant que détenteur de l'information d'identification de communication.

9. Programme commandant un système de traitement d'informations comprenant un équilibreur de charge qui détermine une cible d'attribution d'une communication avec un client, cette communication étant attribuée à un serveur parmi un ensemble de serveurs pour fournir un service au client, de sorte qu'il remplisse les fonctions :
d'un équilibreur de charge qui détermine une cible d'attribution de la communication,
d'une unité d'identification de serveur qui identifie un premier serveur parmi l'ensemble de serveurs auquel la communication a été attribuée par l'équilibreur de charge,
d'une unité de détermination de serveur cible de duplication qui fixe au moins l'un des serveurs de l'ensemble de serveurs en tant qu'un second serveur qui est la cible de la duplication de l'information d'identification de communication permettant d'identifier la communication,
d'une unité de duplication qui reproduit pour le second serveur l'information d'identification de communication devant être enregistrée dans celui-ci, et
d'une unité de notification qui informe le second serveur de l'information par laquelle le premier serveur peut être identifié en tant que détenteur de l'information d'identification de communication, et provoque l'enregistrement par le second serveur de l'information identifiant le premier serveur,
le système étant réalisé de sorte que le second serveur puisse mettre à jour l'information d'identification de communication enregistrée dans le premier serveur en tant que détenteur de cette information d'identification de communication.
